# EUROPEAN PATENT SPECIFICATION

(11) **EP 0 522 874 B1**
(45) Date of publication and mention of the grant of the patent: **11.09.1996**
(21) Application number: 92306359.8
(22) Date of filing: 10.07.1992
(51) Int. Cl.: F03D 7/02

(54) **Pitch control mechanism for ram air turbine**
Winkelverstelleinrichtung für Stauluftturbine
Système à pas variable pour turbine à air sous pression dynamique

(30) Priority: 10.07.1991 GB 9114894
(43) Date of publication of application: 13.01.1993
(73) Proprietor: SUNDSTRAND CORPORATION, Rockford Illinois 61125- 7003 (US)
(72) Inventor: Kirkman, Brian George, Pianswick, Gloucestershire (GB)
(74) Representative: Hogg, Jeffery Keith

(56) References cited:
- WO-A-86/04385
- GB-A- 124 935
- GB-A- 1 065 582
- US-A- 3 013 613

## Description

This invention relates to a pitch control mechanism for controlling the pitch of a ram air turbine blade.

Ram air turbines (RAT) are designed to be deployed into the slipstream of aircraft in the event of an emergency to generate power to maintain control of the aircraft. RATs generally comprise a plurality of blades radially extending from an axis of rotation about which the blades are driven by the slipstream. The motion is then passed to an electrical generator, or more commonly an hydraulic pump where it is converted to useful power.

It is known to govern the speed at which RATs rotate to produce a consistent power output and to prevent possible catastrophic disintegration of the blades due to centrifugal forces. This control is achieved by varying the pitch of the blades to lessen or increase their interaction with the airflow.

GB 2072271 discloses the use of flyweights which move radially outwards from an axis of rotation of the RAT to generate a pitch changing force which is translated by a levering action to a slider which is displaced axially. The slider interacts with an offset pin in the shank of each blade to convert the axial motion to rotation of the blade about its pitch changing axis. Such an arrangement is complicated, the translations of the various types of movement requiring a number of parts that must be carefully aligned hence making the mechanism expensive to manufacture and service, and prone to failure.

WO-A-8604384 discloses the use of counterweights fixed to the blade so as to rotate with it about the pitch change axis, thereby to rotate the blade to a courser pitch position as a result of centrifugal forces generated when this rotates.

It is an object of the invention to provide an improved pitch control mechanism.

According to the invention there is provided a pitch control mechanism for controlling the pitch of a ram air turbine blade which is mounted on a turbine hub via a shaft so as to extend radially from the hub along a pitch change axis, about which it is adjustable, the mechanism comprising at least one mass rotatable with the hub and rotatable about the pitch change axis so as to apply a pitch changing force to the blade when the hub rotates, characterised in that said mass is mounted on the blade and shaft assembly so as to move radially away from the pitch change axis in response to rotation of the hub.

The mass may be pivotally or slidably carried on a member rigid with the blade that projects radially from the pitch change axis; or may be pivotally carried on a member that is rotatable relative to the blade about the pitch change, a connection being provided between the mass and the blade.

Preferably, a spring bias is applied to return the mass to its inner stationary position as the speed of rotation falls. The spring may be a compression or extension spring, wound or unwound, torsion spring, a resiliently deformable member, or a gas or fluid spring.

Further, preferably a pair of similar masses are provided to balance one another about the pitch change axis.

Specific embodiments of the invention will now be described, by way of example only, with reference to the drawings in which:

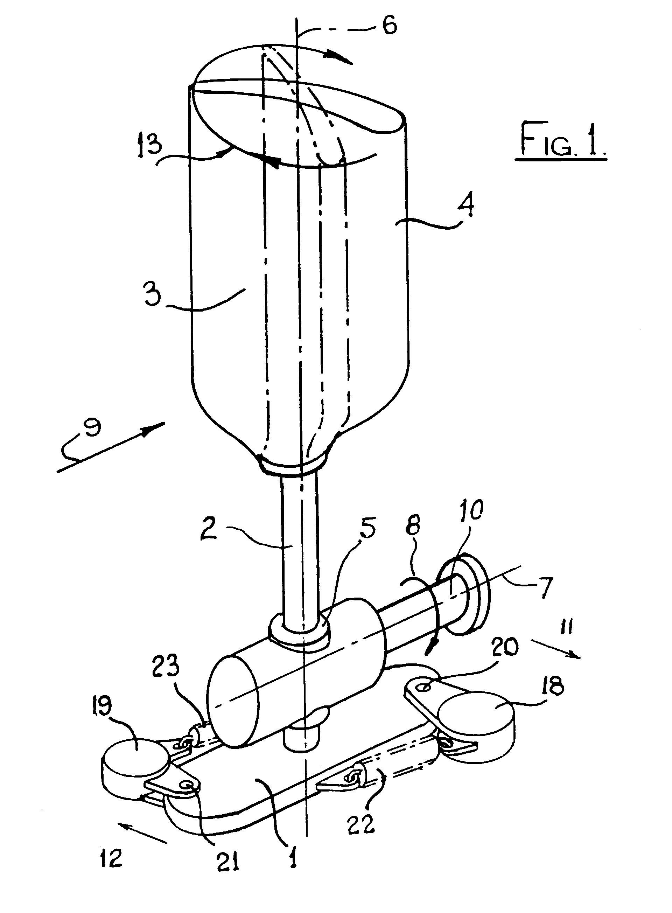

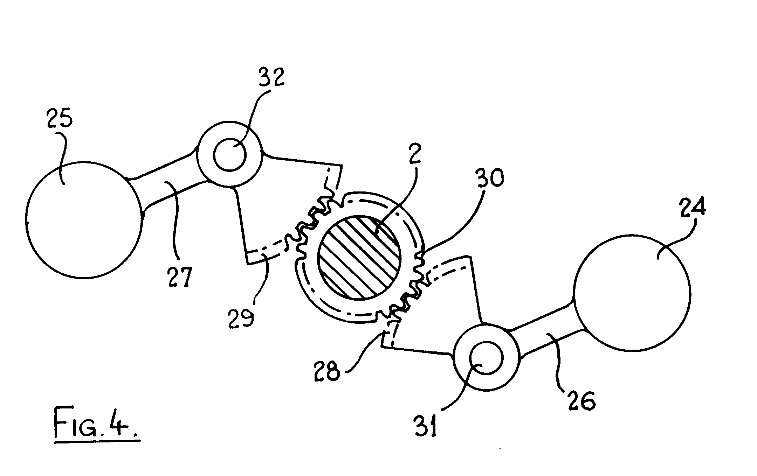

Figures 1 to 6 show pitch control mechanisms in accordance with the invention.

The pitch control mechanism shown in Figure 1 comprises a bar like mass 1 fixed to a shank 2 perpendicularly to a face 3 of a ram air turbine blade 4. The associated RAT components are not shown but would include a hydraulic pump, a nose cone and strut. The shank 2 passes through the mass 1 to a journal 5 within which it is retained but permitted to revolve about a blade pitch axis 6. The blade pitch axis 6 extends from an axis of rotation 7 of the ram air turbine, about which the turbine revolves in the direction of arrow 8 under the action of airflow 9, through the shank 2 and along the length of the blade 4. The blade 4 revolves with a main shaft 10 to which the journal 5 is fixed.

As shown in Figure 1, the blade 4 is in a fine pitch position in which it is nearly normal to the airflow 9. The fine pitch position is more clearly shown in Figure 2(a). When in the fine pitch position, the blade is set to absorb the maximum amount of energy from the airflow. It is in this position that the RAT will revolve with the greatest speed.

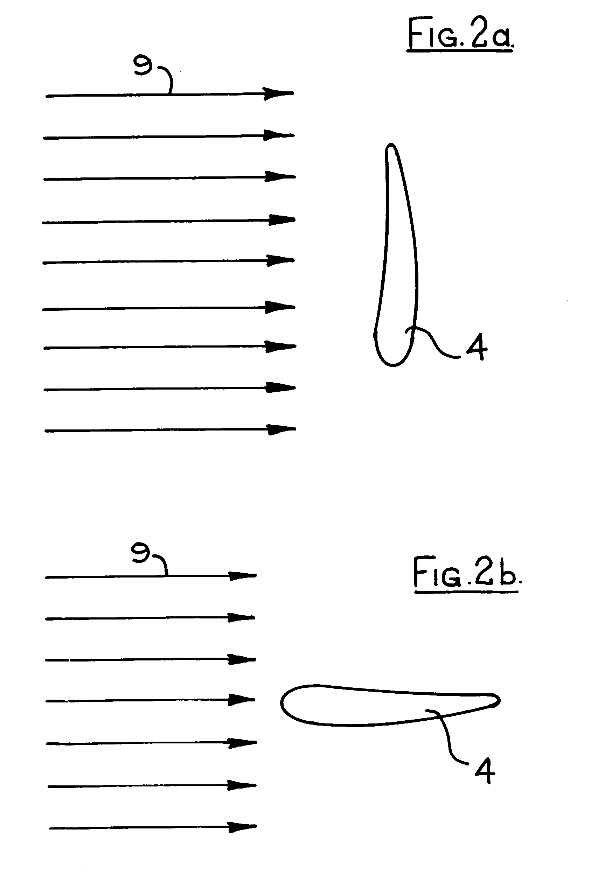

The mass 1 will, as a consequence of the blades 4 revolving about the axis of revolution 7, tend to move towards a position in which it is tangential to the motion. This causes a twisting movement in the direction of arrows 11 and 12, turning the blade 4 and shaft 2 in the journal 5 about the pitch axis 6 in the direction of arrow 13. The blade thus adopts a coarse pitch position as more clearly shown in Figure 2(b).

In the coarse pitch position, the blade 4 is nearly parallel to the airflow 9 and in this position absorbs less of the available energy. Consequently, the RAT revolves at a lower speed when in this position.

The action of the mass 1 is thus to control the speed at which the RAT rotates, as the speed increases the mass 1 tends to coarsen the pitch to a slow position so preventing disintegration of the blade 4.

In the embodiment shown in Figure 1, submasses in the form of bob-weights 18 and 19 are mounted on the outer ends of the mass 1 by means of pivots 20 and 21. As this arrangement revolves about the axis of revolution 6, the pitch changing force generated by the mass 1 is increased since the submasses 18 and 19 swing outwards away from the mass 1 against the springs 21 and 22 due to the rotation. As the speed decreases, the submasses 18 and 19 will be drawn back to mass 1 by the action of springs 21 and 22, thereby reducing the pitch changing force generated. Thus the speed of revolution of the RAT is maintained within a band of speeds.

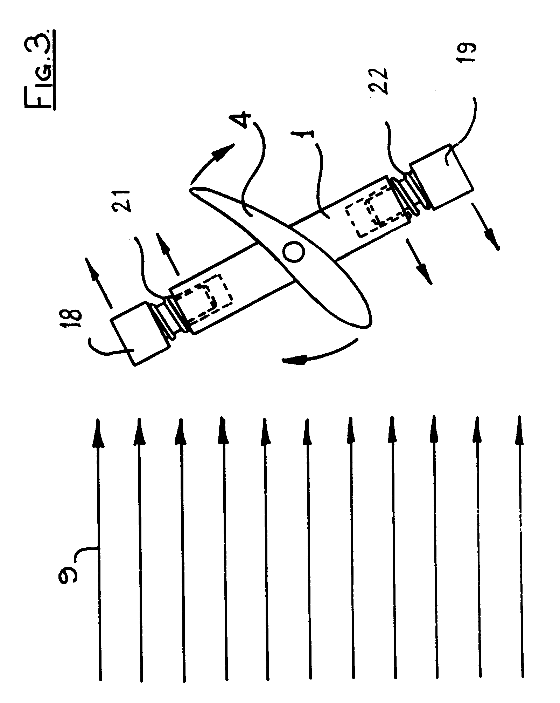

A similar embodiment is shown in Figure 3, in which like components have the same reference numerals. This embodiment has the same general form as shown in Figure 1 except that the submasses 18 and 19, instead of being pivotally connected to the mass 1, are slidably located in the ends thereof.

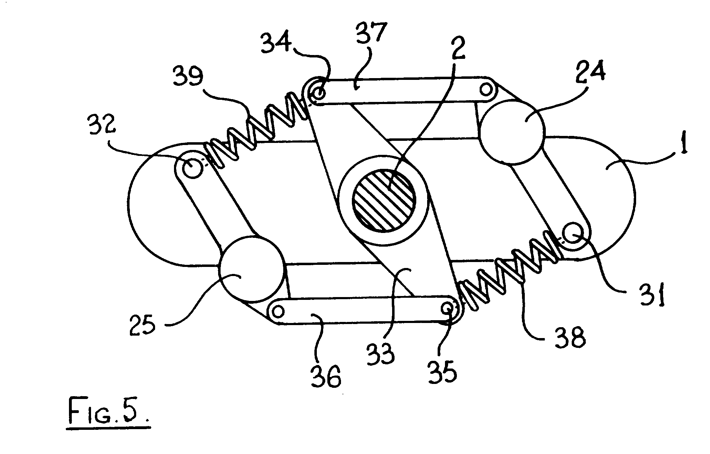

Figure 5 shows a further pitch control mechanism in which bob-weights 24 and 25 are formed with cranked arms 26 and 27. At the ends of the arms 26, 27 are arcuate toothed surfaces forming racks 28 and 29. These racks 28, 29 mesh with a toothed cog-like portion 30 of the shaft 2. As the RAT revolves, the weights 24 and 25 swing about pivots 31 and 32 in the cranked arms 26 and 27 to rotate the shank 2, thereby varying the pitch of the blade (not shown). To return the bob-weights 24 and 25, a spring arrangement (not shown) is used in a similar manner as before. Because the bob weights act on a common cog, they are interlinked and more symmetrically about the pitch charge axis in synchronisation.

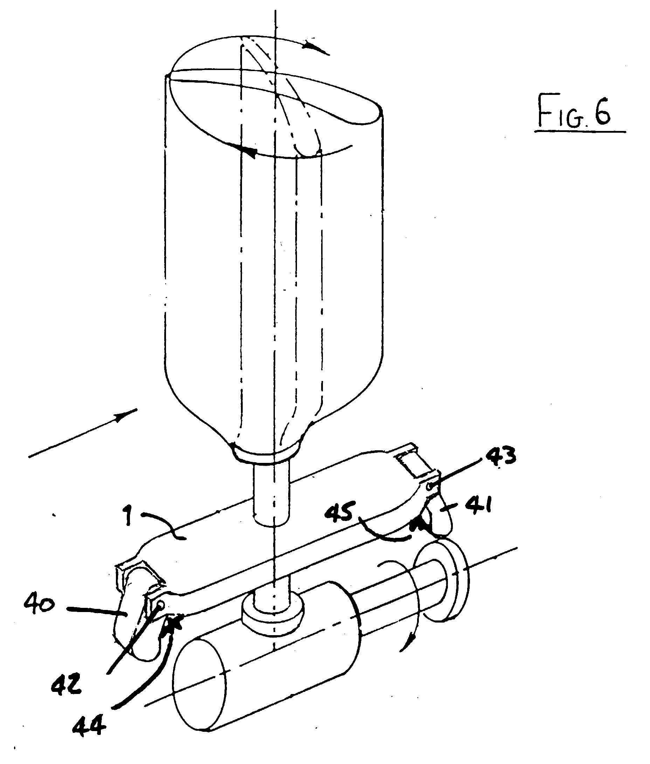

Figure 6 shows a further embodiment of the invention in which the bob-weights are linked. The bob-weights 24 and 25, in this case, have pivot points 31 and 32 by means of which they are connected to mass 1. The end of the shank 2 is formed into a horizontally extending arm 33 having formed in the ends thereof attachment holes 34 and 35. The bob-weights 24 and 25 are linked to the arm 33 by push rods 36 and 37, and extension springs 38 and 39. Upon rotation of the RAT bob-weights 24 and 25 move outwards, as before, applying, via the push rods 36 and 37 a pitch changing force to the blade shank 2.

Whilst the pitch control mechanisms have been described in relation to controlling one blade it may be possible in alternative embodiments to control more than one blade from one mechanism.

Furthermore, in the case of a single bladed ram air turbine, the pitch control mechanism may be located on the opposite side of the axis of rotation of the turbine from the turbine blade to form a counterweight.

## Claims

1. A pitch control mechanism for controlling the pitch of a ram air turbine blade (4) which is mounted on a turbine hub via a shaft (2) so as to extend radially from the hub along a pitch change axis (6), about which it is adjustable, the mechanism comprising at least one mass (1,18,19) rotatable with the hub and rotatable about the pitch change axis so as to apply a pitch changing force to the blade (4) when the hub rotates, characterised in that said mass (18,19) mounted on the blade when in use and shaft assembly (2,4) so as to move radially away from the pitch change axis (6) in response to rotation of the hub.

2. A mechanism as claimed in claim 1 in which said mass (18,19) is displaceable away from the pitch change axis (6) in response to rotation of the hub, thereby to apply an increasing pitch changing force to the blade.

3. A mechanism as claimed in claim 1 or 2 in which said mass (18,19) is pivotally connected to a member (1) rigid with the blade (4) that projects radially from the pitch change axis.

4. A mechanism as claimed in claim 1 or 2 in which said mass (18,19) is a linear sliding fit with a member (1) rigid with the blade and projecting radially from the pitch change axis.

5. A mechanism as claimed in claim 3 or 4 in which spring means (21,22) serves to return said mass (18,19) to a stationery position as the speed of rotation of the hub falls.

6. A mechanism as claimed in any one of the preceding claims in which a pair of masses (18,19) are mounted on the blade and shaft assembly (2,4) to balance one another about the pitch change axis (6), each of said pair of masses (18,19) being mounted in the manner of said at least one mass.

7. A mechanism as claimed in claim 1 in which said mass (24,25) is pivotally connected to a member (1) that is rotatable relative to the blade (4)about the pitch change axis (6) and in which said mass (24,25) is connected to the blade (4) via connection means (28-30,33-37), whereby said pitch changing force is applied to the blade.

8. A mechanism as claimed in claim 7 in which said connection means (28-30) comprises a rack rigid with the mass and having teeth in engagement with a rack rigid with the blade.

9. A mechanism as claimed in claim 8 in which said mass (24,25) is carried at one end of a crank arm (26,27) which carries said rack (28,29) at its other end.

10. A mechanism as claimed in claim 7 in which said connection means (33-37) comprises a rigid link pivotally connected between the mass (24,25) and the blade (4).

11. A mechanism as claimed in any of claims 7 to 10 in which spring means (38,39) serves to return said mass (24,25) to a stationery position as the speed of rotation of the hub falls.

12. A mechanism as claimed in any one of claims 7 to 11 in which a pair of masses (24,25) are provided and mounted to balance one another about the pitch change axis (6), each of said pair of masses (24,25) being mounted in the manner of said at least one mass.

## Patentansprüche

1. Anstellungssteuereinrichtung zum Steuern der Anstellung eines Stauluftturbinenflügels (4), welcher an einer Turbinennabe über eine Welle (2) derart angebracht ist, daß er sich radial von der Nabe entlang einer Anstellungsänderungsachse (6) erstreckt, um welche er verstellbar ist, wobei die Einrichtung zumindest eine Masse (1, 18, 19) aufweist, die mit der Nabe drehbar und um die Anstellungsänderungsachse derart drehbar ist, daß sie eine Anstellungsänderungskraft auf den Flügel (4) ausübt, wenn sich die Nabe dreht, **dadurch gekennzeichnet,** daß die Masse (18, 19) an dem Flügel bei dessen Verwendung und an der Wellenanordnung (2, 4) derart angebracht ist, daß sie sich radial von der Anstellungsänderungsachse (6) infolge der Drehung der Nabe wegbewegt.

2. Einrichtung nach Anspruch 1, bei welcher die Masse (18, 19) von der Anstellungsänderungsachse (6) infolge der Drehung der Nabe wegschiebbar ist, wodurch eine zunehmende Anstellungsänderungskraft auf den Flügel ausgeübt werden kann.

3. Einrichtung nach Anspruch 1 oder 2, bei welcher die Masse (18, 19) mit einem Glied (1) schwenkbar verbunden ist, das fest mit dem Flügel (4) verbunden ist, der radial aus der Anstellungsänderungsachse hervorsteht.

4. Einrichtung nach Anspruch 1 oder 2, bei welcher die Masse (18, 19) linear gleitend in ein Teil (1) eingepaßt ist, das fest mit dem Flügel verbunden ist und radial aus der Anstellungsänderungsachse hervorsteht.

5. Einrichtung nach Anspruch 3 oder 4, in welcher Federmittel (21, 22) dazu dienen, die Massen (18, 19) in eine Ausgangsposition zurückzuführen, wenn die Drehzahl der Nabe abnimmt.

6. Einrichtung nach einem der vorhergehenden Ansprüche, bei welcher ein Paar von Massen (18, 199 an dem Flügel und der Wellenanordnung (2, 4) angebracht sind, um sich einander im Gleichgewicht um die Anstellungsänderungsachse (6) zu halten, wobei jedes Paar der Massen (18, 19) in der Weise der zumindest einen Masse angebracht ist.

7. Einrichtung nach Anspruch 1, bei welcher die Masse (24, 25) mit einem Glied (1) schwenkbar verbunden ist, das relativ zu dem Flügel (4) um die Anstellungsänderungsachse (6) drehbar ist, und bei welcher die Masse (24, 25) mit dem Flügel (4) über Verbindungsmittel (28-30, 33-37) verbunden ist, wodurch die Anstellungsänderungskraft auf den Flügel ausgeübt wird.

8. Einrichtung nach Anspruch 7, bei welcher das Verbindungsmittel (28-30) eine mit der Masse starr verbundene Zahnstange und Zähne aufweist, die mit einer mit dem Flügel starr verbundenen Zahnstange in Eingriff stehen.

9. Einrichtung nach Anspruch 8, bei welcher die Masse (24, 25) an einem Ende eines Kurbelarmes (26, 27) geführt ist, welcher die Zahnstange (28, 29) an seinem anderen Ende führt.

10. Einrichtung nach Anspruch 7, bei welcher das Verbindungsmittel (33-37) ein festes Gelenk aufweist, das zwischen der Masse (24, 25) und dem Flügel (4) schwenkbar angeschlossen ist.

11. Einrichtung nach einem der Ansprüche 7 bis 10, bei welcher Federmittel (38, 39) dazu dienen, die Masse (24, 25) in eine Ausgangsposition zurückzuführen, wenn die Drehzahl der Nabe abnimmt.

12. Einrichtung nach einem der Ansprüche 7 bis 11, bei welcher ein Paar von Massen (24, 25) vorgesehen und angebracht sind, um sich einander um die Anstellungsänderungsachse (6) im Gleichgewicht zu halten, wobei jedes Paar von Massen (24, 25) in der Weise der zumindest einen Masse angebracht ist.

## Revendications

1. Mécanisme de commande de pas pour commander le pas d'une aube (4) de turbine à pression dynamique qui est montée sur un moyeu de turbine par l'intermédiaire d'un arbre (2) de façon à s'étendre radialement depuis le moyeu sur un axe (6) de changement de pas, autour duquel il est réglable, le mécanisme comprenant au moins une masse (1,18,19) pouvant tourner avec le moyeu et pouvant tourner autour de l'axe de changement de pas de façon à appliquer une force de changement de pas à l'aube (4) lorsque le moyeu tourne, caractérisé en ce que ladite masse (18, 19) est montée sur l'ensemble (2,4), constitué par l'aube lors de son utilisation et l'arbre, de façon à s'éloigner radialement de l'axe (6) de changement de pas en réponse à la rotation du moyeu.

2. Mécanisme selon la revendication 1, dans lequel ladite masse (18, 19) peut s'éloigner de l'axe (6) de changement de pas en réponse à la rotation du moyeu, pour appliquer de ce fait à l'aube une force croissante de changement de pas.

3. Mécanisme selon la revendication 1 ou 2, dans lequel ladite masse (18, 19) est articulée à un élément (1) faisant corps avec l'aube (4) qui fait saillie radialement depuis l'axe de changement de pas.

4. Mécanisme selon la revendication 1 ou 2, dans lequel ladite masse (18, 19) est ajustée de manière linéaire à glissement sur un élément (1) faisant corps avec l'aube (4) qui fait saillie radialement depuis l'axe de changement de pas.

5. Mécanisme selon la revendication 3 ou 4, dans lequel un moyen formant ressort (21,22) sert à remettre ladite masse (18,19) dans une position fixe lorsque la vitesse de rotation du moyeu diminue.

6. Mécanisme selon l'une quelconque des revendications précédentes, dans lequel une paire de masses (18,19) sont montées sur l'ensemble (2,4) constitué de l'aube et de l'arbre de façon à s'équilibrer mutuellement autour de l'axe (6) de changement de pas chacune des masses de ladite paire de masses (18,19) étant montée à la manière de ladite masse au moins unique.

7. Mécanisme selon la revendication 1, dans lequel ladite masse (24,25) est articulée à un élément (1) pouvant tourner par rapport à l'aube (4) autour de l'axe (6) de changement de pas et dans lequel ladite masse (24,25) est reliée à l'aube (4) par l'intermédiaire d'un moyen de liaison (28-30,33-37), grâce à quoi ladite force de changement de pas est appliquée à l'aube.

8. Mécanisme selon la revendication 7, dans lequel ledit moyen de liaison (28-30) comporte une crémaillère solidaire de la masse et ayant des dents en prise avec une crémaillère solidaire de l'aube.

9. Mécanisme selon la revendication 8, dans lequel ladite masse (24,25) est portée à une première extrémité d'un bras (26,27) de manivelle qui porte à son autre extrémité ladite crémaillère (28,29).

10. Mécanisme selon la revendication 7, dans lequel ledit moyen de liaison (33-37) comporte une biellette rigide articulée entre la masse (24,25) et l'aube (4).

11. Mécanisme selon l'une quelconque des revendications 7 à 10, dans lequel le moyen formant ressort (38,39) sert à remettre ladite masse (24,25) dans une position fixe lorsque la vitesse de rotation de moyeu diminue.

12. Mécanisme selon l'une quelconque des revendications 7 à 11, dans lequel une paire de masses (24,25) sont présentes et montées pour s'équilibrer mutuellement autour de l'axe (6) de changement de pas, chaque masse de ladite paire de masses (24,25) étant montée à la manière de ladite masse au moins unique.
